# EUROPEAN PATENT APPLICATION

(11) **EP 4 020 132 A1**
(43) Date of publication of application: **29.06.2022**
(21) Application number: 20873426.9
(22) Date of filing: 10.09.2020
(51) Int. Cl.: G06F 1/329

(54) **APPLICATION CONTROL METHOD AND APPARATUS, ELECTRONIC DEVICE, AND STORAGE MEDIUM**

(30) Priority: 10.10.2019 CN 201910959670
(71) Applicant: GUANGDONG OPPO MOBILE TELECOMMUNICATIONS CORP., LTD., Dongguan, Guangdong 523860 (CN)
(72) Inventor: CHEN, Yan, Dongguan, Guangdong 523860 (CN)
(74) Representative: Rossi, Ugo
(86) International application number: PCT/CN2020/114584
(87) International publication number: WO 2021/068707

(57) **Abstract**

An application control method and apparatus, an electronic device (60), and a storage medium, the method and apparatus being applicable to the electronic device (60). The method comprises : determining a type of an application to be activated; and activating, according to the type of the application, an operating environment corresponding to the application, wherein the operating environment comprises an application operating system and a real-time operating system running independently from each other on the electronic device (60), and a resource required by the application operating system during running is greater than a resource required by the real-time operating system during running.

## Description

### PRIORITY INFORMATION

This application claims priority to a Chinese application No. 201910959670.9 filed on October 10, 2019. The entirety of the above-mentioned application is hereby incorporated by reference herein.

### TECHNICAL FIELD

The disclosure relates to a technical field of electronic devices, and particularly to an application control method and apparatus, electronic device, and storage medium.

### BACKGROUND

With the development of mobile terminal technologies, mobile terminals are applied widespread, and the types of the applications running on the mobile terminals are more and more complicated.

### SUMMARY

The embodiments of the disclosure solve at least one of the technical problems in the related art to a certain extent.

In view of this, the embodiments of the disclosure provide an application control method and apparatus, an electronic device, and a storage medium.

In a first aspect, the embodiments of the disclosure provide an application control method. The application control method is applied to an electronic device and includes operations as follows. A type of a to-be-launched application is determined. A running system corresponding to the to-be-launched application is started, according to the type of the to-be-launched application. The running system includes an application operating system and a real-time operating system, the application operating system and the real-time operating system run independently of each other on the electronic device, where resources required for running the application operating system are greater than resources required for running the real-time operating system.

In a second aspect, the embodiments of the disclosure provide another application control method. The application control method is applied to an electronic device and includes operations as follows. An application of a first application type and an application of a second application type are displayed, where resources required for running the application of the first application type are greater than resources required for running the application of the second application type. An application-launching instruction is received. In response to detecting that the application-launching instruction is directed at the application of the first application type, the application of the first application type is controlled to run in an application operating system. In response to detecting that the application-launching instruction is directed at the application of the second application type, the application of the second application type is controlled to run in a real-time operating system.

In a third aspect, the embodiments of the disclosure provide an application control apparatus. The application control apparatus is applied to an electronic device, the apparatus includes a determining module and a starting module. The determining module is configured to determine a type of a to-be-launched application. The starting module is configured to start, according to the type of the application, a running system corresponding to the to-be-launched application. The running system includes an application operating system and a real-time operating system, the application operating system and the real-time operating system run independently of each other on the electronic device, where resources required for running the application operating system are greater than resources required for running the real-time operating system.

In a fourth aspect, the embodiments of the disclosure provide another application control apparatus. The apparatus is applied to an electronic device, and includes a displaying module, a receiving module and a controlling module. The displaying module is configured to display an application of a first application type and an application of a second application type, where resources required for running the application of the first application type are greater than resources required for running the application of the second application type. The receiving module is configured to receive an application-launching instruction. The controlling module is configured to control, when the application-launching instruction is directed at the application of the first application type, the application of the first application type to run in an application operating system; and control, when the application-launching instruction is directed at the application of the second application type, the application of the second application type to run in a real-time operating system.

In a fifth aspect, the embodiments of the disclosure provide an electronic device. The electronic device includes a processor; and a memory, storing an application operating system and a real-time operating system. The application operating system and the real-time operating system are capable of running independently of each other. The processor is configured to: determine a type of a to-be-launched application; and start, according to the type of the to-be-launched application, a running system corresponding to the to-be-launched application. The running system includes the application operating system and the real-time operating system which run independently of each other on the electronic device, and resources required for running the application operating system are greater than resources required for running the real-time operating system.

In a sixth aspect, the embodiments of the disclosure provide a computer readable storage medium. When programs are executed by a processor, the terminal is enabled to implement an application control method. The method includes: the application control method provided by the embodiments in the first aspect or the application control method provided by the embodiments in the second aspect.

Additional aspects and advantages of the disclosure will be given in part in the following description, and become apparent in part from the following descriptions, or be learned from the practice of the embodiments of the disclosure.

### BRIEF DESCRIPTION OF THE DRAWINGS

The above and/or additional aspects and advantages of the disclosure will become more apparent and easily understood from the following description of the embodiments in conjunction with the drawings, in which:
FIG. 1 is a schematic flowchart illustrating an application control method provided by the embodiments of the disclosure;
FIG. 2 is a schematic diagram illustrating an example to which the embodiments of the disclosure are applied;
FIG. 3 is a schematic flowchart illustrating another application control method provided by the embodiments of the disclosure;
FIG. 4 is a structural schematic diagram illustrating an application control apparatus provided by the embodiments of the disclosure;
FIG. 5 is a structural schematic diagram illustrating another application control apparatus provided by the embodiments of the disclosure; and
FIG. 6 is a structural schematic diagram illustrating an electronic device provided by the embodiments of the disclosure.

### DETAILED DESCRIPTION OF PREFERRED EMBODIMENTS

The embodiments of the disclosure will be described in detail below. The examples of the embodiments are shown in the drawings, where same or similar references indicate, throughout the drawings, same or similar elements or elements having same or similar functions. The embodiments described with reference to the drawings are exemplary and only used for explaining the disclosure, and should not be construed as limitations to the disclosure. On the contrary, the embodiments of the disclosure include all the variations, modifications and equivalents falling within the spirit and scope of the appended claims.

In the related art, for controlling the running applications, an application operating system (such as, an Android operating system, or a Linux operating system) is generally employed to control all of the applications running on a mobile terminal.

In this case, all of the applications are running in the application operating system, which results in high power consumption for running the applications and undesirable effect of controlling the applications.

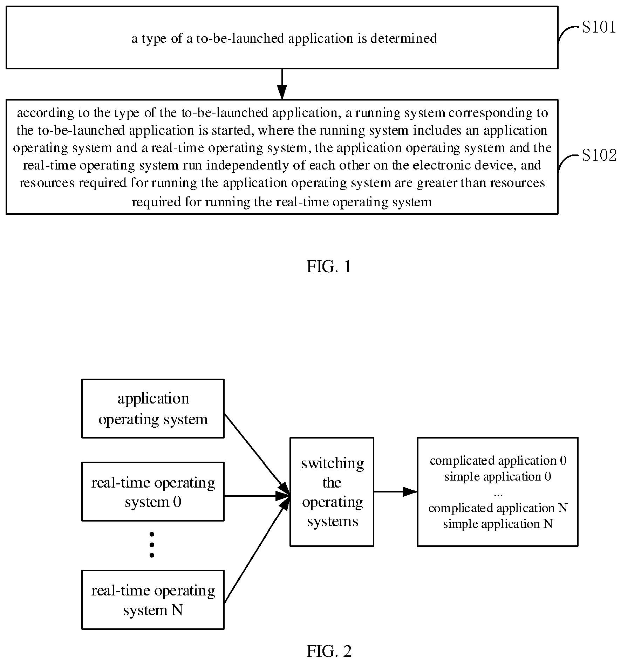

Referring to FIG. 1, some embodiments of the disclosure provide an application control method, which is applied to an electronic device. The application control method includes the operations as follows. A type of a to-be-launched application is determined. A running system corresponding to the to-be-launched application is started, according to the type of the to-be-launched application. The running system includes an application operating system and a real-time operating system, the application operating system and the real-time operating system run independently of each other on the electronic device, where resources required for running the application operating system are greater than resources required for running the real-time operating system.

In some embodiments, the type of the to-be-launched application includes a first application type and a second application type, where resources required for running the to-be-launched application of the first application type are greater than resources required for running the to-be-launched application of the second application type. In response to determining that the type of the to-be-launched application is the first application type, the application operating system is started to run the to-be-launched application of the first application type in the application operating system. In response to determining that the type of the to-be-launched application is the second application type, the real-time operating system is started to run the to-be-launched application of the second application type in the real-time operating system.

In some embodiments, in response to determining that the type of the to-be-launched application is the first application type and a current running system is the real-time operating system, the real-time operating system is closed, and the application operating system is started to run the to-be-launched application of the first application type in the application operating system.

In some embodiments, in response to determining that the type of the to-be-launched application is the second application type and a current running system is the application operating system, the application operating system is closed, and the real-time operating system is started to run the to-be-launched application of the second application type in the real-time operating system.

In some embodiments, an application processor is adopted to control the to-be-launched application of the first application type to run in the application operating system; and a coprocessor is adopted to control the to-be-launched application of the second application type to run in the real-time operating system, where a power consumption of the coprocessor is less than a power consumption of the application processor.

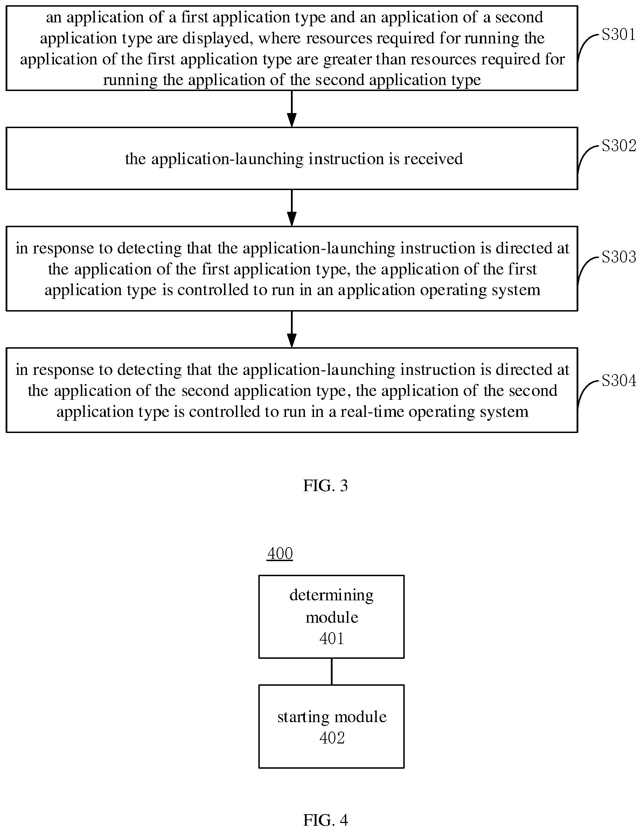

Referring to FIG. 3, some embodiments of the disclosure provide another application control method, which is applied to an electronic device. The application control method includes operations as follows. An application of a first application type and an application of a second application type are displayed, where resources required for running the application of the first application type are greater than resources required for running the application of the second application type. An application-launching instruction is received. In response to detecting that the application-launching instruction is directed at the application of the first application type, the application of the first application type is controlled to run in an application operating system. In response to detecting that the application-launching instruction is directed at the application of the second application type, the application of the second application type is controlled to run in a real-time operating system.

In some embodiments, when it is detected that the application-launching instruction is directed at the application of the first application type, a current running system is detected, and it is determined whether the current running system is the real-time operating system. In response to determining that the current running system is the real-time operating system, the real-time operating system is closed, and the application operating system is started to run the application of the first application type in the application operating system.

In some embodiments, when it is detected that the application-launching instruction is directed at the application of the second application type, a current running system is detected, and it is determined that whether the current running system is the application operating system. In response to determining that the current running system is the application operating system, the application operating system is closed, and the real-time operating system is started to run the application of the second application type in the real-time operating system.

In some embodiments, an application processor is adopted to control the application of the first application type to run in the application operating system. A coprocessor is adopted to control the application of the second application type to run in the real-time operating system, where a power consumption of the coprocessor is less than a power consumption of the application processor.

Referring to FIG. 4, some embodiments of the disclosure provide an application control apparatus 400, which is applied to an electronic device. The application control apparatus 400 includes a determining module 401 and a starting module 402. The determining module 401 is configured to determine a type of a to-be-launched application. The starting module 402 is configured to start, according to the type of the to-be-launched application, a running system corresponding to the to-be-launched application. The running system includes an application operating system and a real-time operating system, the application operating system and the real-time operating system run independently of each other on the electronic device, where resources required for running the application operating system are greater than resources required for running the real-time operating system.

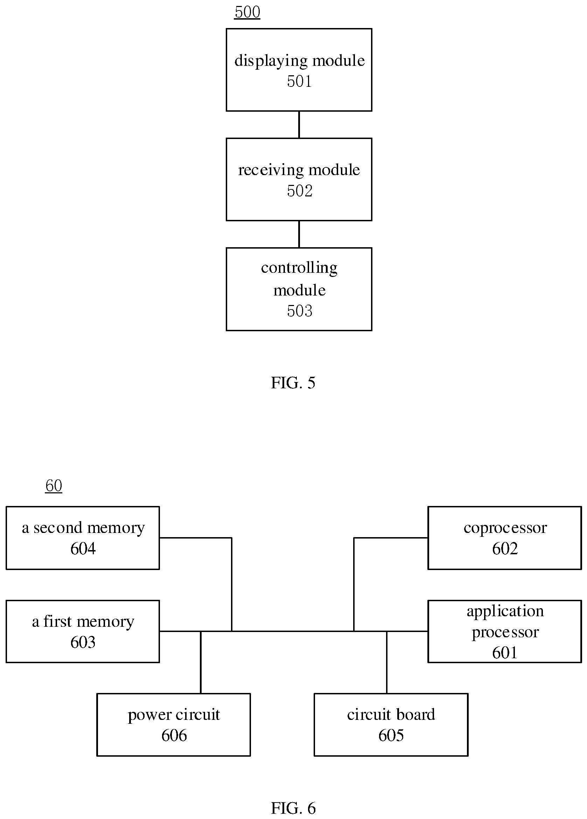

Referring to FIG. 5, some embodiments of the disclosure provide another application control apparatus 500, which is applied to an electronic device. The apparatus 500 includes a displaying module 501, a receiving module 502 and a controlling module 503. The displaying module 501 is configured to display an application of a first application type and an application of a second application type, where resources required for running the application of the first application type are greater than resources required for running the application of the second application type. The receiving module 502 is configured to receive an application-launching instruction. The controlling module 503 is configured to control, when the application-launching instruction is directed at the application of the first application type, the application of the first application type to run in an application operating system; and control, when the application-launching instruction is directed at the application of the second application type, the application of the second application type to run in a real-time operating system.

Referring to FIG. 6, some embodiments of the disclosure provide an electronic device 60. The electronic device 60 includes a processor, and a memory. The memory stores an application operating system and a real-time operating system, in which the application operating system and the real-time operating system are capable of running independently of each other. The processor is configured to: determine a type of a to-be-launched application; and start, according to the type of the to-be-launched application, a running system corresponding to the to-be-launched application. The running system includes the application operating system and the real-time operating system which run independently of each other on the electronic device, where resources required for running the application operating system are greater than resources required for running the real-time operating system.

In some embodiments, the processor includes an application processor 601 and a coprocessor 602. The application processor 601 is configured to control the to-be-launched application of a first application type to run in the application operating system. The coprocessor 602 is configured to control the to-be-launched application of a second application type to run in the real-time operating system, where a power consumption of the coprocessor 602 is less than a power consumption of the application processor.

In some embodiments, the memory includes a first memory 603 and a second memory 604, and the application operating system and the real-time operating system are stored in the first memory 603 and the second memory 604, respectively.

In some embodiments, the type of the to-be-launched application includes a first application type and a second application type, where resources required for running the to-be-launched application of the first application type are greater than resources required for running the to-be-launched application of the second application type. The processor is further configured to start, when it is determined that the type of the to-be-launched application is the first application type, the application operating system to run the to-be-launched application of the first application type in the application operating system; and start, when it is determined that the type of the to-be-launched application is the second application type, the real-time operating system to run the to-be-launched application of the second application type in the real-time operating system.

In some embodiments, the processor is further configured to: when it is determined that the type of the to-be-launched application is the first application type and a current running system is the real-time operating system, close the real-time operating system, and start the application operating system to run the to-be-launched application of the first application type in the application operating system.

In some embodiments, the processor is further configured to: when it is determined that the type of the to-be-launched application is the second application type and a current running system is the application operating system, close the application operating system, and start the real-time operating system to run the to-be-launched application of the second application type in the real-time operating system.

In some embodiments, an application of a first application type and an application of a second application type are displayed on the electronic device 60, where resources required for running the application of the first application type are greater than resources required for running the application of the second application type. The electronic device 60 includes a processor and a memory. The memory stores an application operating system and a real-time operating system, in which the application operating system and the real-time operating system are capable of running independently of each other. The processor is configured to: receive an application-launching instruction; and control, when the application-launching instruction is directed at the application of the first application type, the application of the first application type to run in an application operating system, and control, when the application-launching instruction is directed at the application of the second application type, the application of the second application type to run in a real-time operating system.

In some embodiments, the processor 60 includes an application processor 601 and a coprocessor 602. The application processor 601 is configured to control the application of the first application type to run in the application operating system. The coprocessor 602 is configured to control the application of the second application type to run in the real-time operating system, where a power consumption of the coprocessor is less than a power consumption of the application processor.

Some embodiments of the disclosure provide a computer readable storage medium. The computer readable storage medium stores thereon a computer program. The program, when being executed by a processor, is configured to: determine a type of a to-be-launched application; and
start, according to the type of the to-be-launched application, a running system corresponding to the to-be-launched application. The running system includes an application operating system and a real-time operating system, the application operating system and the real-time operating system run independently of each other on the electronic device, and resources required for running the application operating system are greater than resources required for running the real-time operating system.

FIG. 1 is a schematic flowchart illustrating an application control method provided by the embodiments of the disclosure.

In the embodiments, it is illustrated by taking a case where the application control method is configured as an application control apparatus as an example.

The embodiments are applied to an electronic device, and different operating systems can run on the electronic device. The different operating systems include an application operating system and a real-time operating system. For example, the application operating system is an Android operating system or a Linux operating system. For example, the real-time operating system is a real time-thread (RT-Thread) operating system. In general, the application operating system is configured to control applications with high resource requirements, and the real-time operating system is configured to control the applications with low resource requirements.

The electronic device is such as a personal computer (PC), a cloud device or a mobile device, in which the mobile device is such as an intelligent phone or a tablet computer.

In the embodiments, the application operating system and the real-time operating system may be stored in the memory of the electronic device in advance, and the application operating system and the real-time operating system are capable of running independently of each other.

Referring to FIG. 1, the method includes blocks S101 and S102.

At block S101, a type of a to-be-launched application is determined.

In practice, different resources are required for running applications of different types. The resource required for running each of the applications installed in the electronic device, may be analyzed in advance, and a corresponding type may be assigned, according to the analysis result, to each of the applications.

When analyzing in advance the resources required for running each of the applications installed in the electronic device, the complexities of to-be-launched applications may be analyzed, and the type of each of the applications may be determined according to the complexities obtained from the analysis.

Optionally, the types of the applications may include a first application type and a second application type, where resources required for running an application of the first application type are greater than resources required for running an application of the second application type. The complexity obtained from the analysis is compared with a threshold. When the complexity is larger than or equal to the threshold, it is determined that the type of the to-be-launched application is the first application type; and when the complexity is less than the threshold, it is determined that the type of the to-be-launched application is the second application type, which is not limited hereto.

The threshold may be set by the user according to user's usage requirements, or set in advance in an ex-factory procedure of the electronic device, which is not limited here.

When analyzing the complexity of the to-be-launched application, power consumption and a response rate of the to-be-launched application may be determined, and the complexity of the to-be-launched application is analyzed based on the power consumption and the response rate, which is not limited here.

After the corresponding type is assigned to the each of the applications according to the analysis result, when the embodiments of the disclosure are implemented, the type of the to-be-launched application may be determined in response to the to-be-launched application is requested to be launched, and then the subsequent operations are triggered.

At block S102, a running system corresponding to the to-be-launched application is started, according to the type of the to-be-launched application, where the running system includes an application operating system and a real-time operating system, the application operating system and the real-time operating system run independently of each other on the electronic device, and resources required for running the application operating system are greater than resources required for running the real-time operating system.

When the embodiments of the disclosure are implemented, in response to that the type of the to-be-launched application is determined at S101, the running system corresponding to the to-be-launched application is started in real time, according to the type of the to-be-launched application. As such, the running system of the electronic device is enabled to be flexibly adapted to the type of the to-be-launched application.

Specifically, the application operating system is configured to control the applications with high resource requirements, the real-time operating system is configured to control the applications with low resource requirements, and the resources required for running the application of the first application type are greater than the resources required for running the application of the second application type. Thus, in response to determining that the type of the to-be-launched application is the first application type, the application operating system is started to run the to-be-launched application of the first application type in the application operating system; and in response to determining that the type of the to-be-launched application is the second application type, the real-time operating system is started to run the to-be-launched application of the second application type in the real-time operating system.

In other words, by the above operations, when launching the to-be-launched application, the running system corresponding to the to-be-launched application is directly started according to the type of the to-be-launched application, therefore, the running system of the electronic device is enabled to be flexibly adapted to the type of the to-be-launched application.

When the embodiments of the disclosure are implemented, besides enabling, in response to detecting the to-be-launched application is requested to be launched, the running system corresponding to the to-be-launched application to be directly started according to the type of the to-be-launched application, a current running system can also be detected, such that the running system is enabled to be switched when the current running system is different from the running system corresponding to the type of the to-be-launched application, thereby ensuring the flexibility of adapting the running system more comprehensively.

In an implementation, in response to determining that the type of the to-be-launched application is the first application type and the current running system is the real-time operating system, the real-time operating system is closed, and the application operating system is started to run the to-be-launched application of the first application type in the application operating system.

In another implementation, in response to determining that the type of the to-be-launched application is the second application type and the current running system is the application operating system, the application operating system is closed, and the real-time operating system is started to run the to-be-launched application of the second application type in the real-time operating system.

In the embodiments of the disclosure, not only the running system is flexibly adapted to the applications with different resource requirements, but also the actual hardware implementation is flexibly adapted to the applications with different resource requirements. Specifically, in the embodiments of the disclosure, when the corresponding running system is started, an application processor is adopted to control the application of the first application type to run in the application operating system, and a coprocessor is adopted to control the application of the second application type to run in the real-time operating system, where power consumption of the coprocessor is less than power consumption of the application processor.

In an implementation, when a high amount of resources are required for running the to-be-launched application, it may be determined to adopt the application processor to drive the application operating system, so as to control the application of the first application type in the application operating system. When a low amount of resources are required for running the to-be-launched application, it may be determined to adopt the coprocessor to drive the real-time operating system, so as to control the application of the second application type in the real-time operating system.

In the embodiments of the disclosure, the application processor may be controlled to enter a sleep mode, when it is determined that the coprocessor is adopted to drive the real-time operating system. Further, the real-time processor may be controlled to enter the sleep mode, when it is determined that the application processor is adopted to drive the application operating system. As such, the power consumption can be effectively reduced, the memory consumption can be decreased, and the speed of scheduling response can be improved.

In the embodiments, the type of the to-be-launched application is determined, and the running system corresponding to the to-be-launched application is started according to the type of the to-be-launched application, where the running system includes the application operating system and the real-time operating system, the application operating system and the real-time operating system run independently of each other on the electronic device, where the resources required for running the application operating system are greater than the resources required for running the real-time operating system. As such, the control effect of the applications can be effectively improved, the power consumption for running the applications can be effectively reduced, and the subsequent running performance of the applications is optimized.

In addition, in the embodiments of the disclosure, considering that the real-time operating system generally has a simple scheduling mechanism, the electronic device may be configured with multiple real-time operating systems, and each of the multiple real-time operating systems controls a respective one of the applications of the second application type. Thus, in a case that there are multiple applications of the second application type in the to-be-launched applications, the electronic device may be controlled to run the multiple applications of the second application type in the corresponding multiple real-time operating systems, respectively. As such, the computing and scheduling advantage of the real-time operating systems can be maximized, the fast and efficient response to various applications with low resource requirements can be ensured, and the overall computing response efficiency of the electronic device can be improved.

In an implementation, when there are multiple to-be-launched applications, some of the to-be-launched applications may require a high amount of resources, and the others may require a low amount of resources. In this case, it is possible to control the electronic device to control all the applications with high resource requirements, i.e., the applications of the first type, to run in application operating system, and control, for each of the applications with low resource requirements, i.e., the applications of the second type, a respective one of the real-time operating system to be started for control. As such, the multiple operating systems are enabled to perform the control respectively, which maximize the computing and scheduling advantages of the real-time operating systems, and ensures the fast and efficient response to various applications with low resource requirements.

Referring to FIG. 2, a schematic diagram illustrating an example to which the embodiments of the disclosure are applied is illustrated. When there are multiple to-be-launched applications, the application operating system is driven to control all the applications with high resource requirements, and for each of the applications with low resource requirements a respective one of the real-time operating systems may be started to control this application with low resource requirements. FIG. 2 illustrates N real-time operating systems, that is, N+1 operating systems are started simultaneously.

FIG. 3 is a schematic flowchart illustrating another application control method provided by the embodiments of the disclosure.

In the embodiments, it is illustrated by taking a case where the application control method is implemented in an application control apparatus as an example.

The embodiments are applied to an electronic device, and different operating systems can run on the electronic device. The different operating systems include an application operating system and a real-time operating system. For example, the application operating system is an Android operating system or a Linux operating system. For example, the real-time operating system is a RT-Thread operating system. In general, the application operating system is configured to control applications with high resource requirements, and the real-time operating system is configured to control applications with low resource requirements.

In the embodiments, the application operating system and the real-time operating system may be stored in the memory of the electronic device in advance, and the application operating system and the real-time operating system are capable of running independently of each other.

Referring to FIG. 3, the method includes blocks S301, S302, S303 and S304.

At block S301, an application of a first application type and an application of a second application type are displayed, where resources required for running the application of the first application type are greater than resources required for running the application of the second application type.

In general, multiple applications are installed on the electronic device, thereby providing the user of the electronic device with the corresponding application services.

In the embodiments of the disclosure, the application of the first application type and the application of the second application type are displayed on the electronic device. The resources required for running the application of the first application type are greater than the resources required for running the application of the second application type.

In practice, different resources are required for running applications of different types. The resource required for running each of the applications installed in the electronic device may be analyzed in advance, and a corresponding type may be assigned, according to the analysis result, to each of the applications.

When analyzing in advance the resources required for running each of the applications installed in the electronic device, the complexities of to-be-launched applications may be analyzed, and the type of each of the applications may be determined according to the complexities obtained from the analysis.

Optionally, the types of the applications may include a first application type and a second application type, where resources required for running an application of the first application type are greater than resources required for running an application of the second application type. The complexity obtained from the analysis is compared with a threshold. When the complexity is larger than or equal to the threshold, it is determined that the type of the to-be-launched application is the first application type; and when the complexity is less than the threshold, it is determined that the type of the to-be-launched application is the second application type, which is not limited here.

The threshold may be set by the user according to user's usage requirements, or set in advance in an ex-factory procedure of the electronic device, which is not limited here.

When analyzing the complexity of the to-be-launched application, power consumption and a response rate of the to-be-launched application may be determined, and the complexity of the to-be-launched application is analyzed based on the power consumption and the response rate, which is not limited here.

After the corresponding type is assigned to the each of the applications according to the analysis result, when the embodiments of the disclosure are implemented, it may monitor in real time whether an application-launching instruction is received.

At S302, the application-launching instruction is received.

The application-launching instruction may be generated in response to a click operation performed on an icon of one application by the user. Alternatively, the application-launching instruction may be generated in response to that the user accesses a related application and performs a corresponding operation in the related application. The application-launching instruction is not limited here.

At S303, in response to detecting that the application-launching instruction is directed at the application of the first application type, the application of the first application type is controlled to run in an application operating system.

At S304, in response to detecting that the application-launching instruction is directed at the application of the second application type, the application of the second application type is controlled to run in a real-time operating system.

When the embodiments of the disclosure are implemented, in response to receiving the application-launching instruction, the application-launching instruction may be analyzed in real time, and the running system corresponding to the application type of the to-be-launched application is started according to the application-launching instruction. As such, the running system of the electronic device is enabled to be flexibly adapted to the application type of the to-be-launched application.

Specifically, the application operating system is configured to control the applications with high resource requirements, the real-time operating system is configured to control the applications with low resource requirements, and the resources required for running the application of the first application type are greater than the resources required for running the application of the second application type. Thus, in response to detecting that the application-launching instruction is directed at the application of the first application type, the application of the first application type is controlled to run in an application operating system; and in response to detecting that the application-launching instruction is directed at the application of the second application type, the application of the second application type is controlled to run in a real-time operating system.

In other words, by the above operations, when receiving the application-launching instruction, the running system corresponding to the type of the application is directly started according to the type of the to-be-launched application, therefore, the running system of the electronic device is enabled to be flexibly adapted to the type of the to-be-launched application.

When the embodiments of the disclosure are implemented, besides enabling, in response to starting the to-be-launched application, the running system corresponding to the type of the to-be-launched application to be directly started according to the type of the to-be-launched application, a current running system can also be detected, such that the running system is enabled to be switched when the current running system is different from the running system corresponding to the type of the to-be-launched application, thereby ensuring the flexibility of adapting the running system of the electronic device more comprehensively.

In an implementation, when it is detected that the application-launching instruction is directed at the application of the first application type, a current running system is detected, and it is determined that whether the current running system is the real-time operating system. In response to determining that the current running system is the real-time operating system, the real-time operating system is closed, and the application operating system is started to run the application of the first application type in the application operating system.

In an implementation, when it is detected that the application-launching instruction is directed at the application of the second application type, a current running system is detected, and it is determined that whether the current running system is the application operating system. In response to determining that the current running system is the application operating system, the application operating system is closed, and the real-time operating system is started to run the application of the second application type in the real-time operating system.

In the embodiments of the disclosure, not only the running system is flexibly adapted to the applications with different resource requirements, but also the actual hardware implementation is flexibly adapted to the applications with different resource requirements. Specifically, an application processor is adopted to control the application of the first application type to run in the application operating system, and a coprocessor is adopted to control the application of the second application type to run in the real-time operating system, where a power consumption of the coprocessor is less than a power consumption of the application processor.

In the embodiments, the application of the first application type and the application of the second application type are displayed, where the resources required for running the application of the first application type are greater than the resources required for running the application of the second application type. And an application-launching instruction is received. In response to detecting that the application-launching instruction is directed at the application of the first application type, the application of the first application type is controlled to run in the application operating system. In response to detecting that the application-launching instruction is directed at the application of the second application type, the application of the second application type is controlled to run in the real-time operating system. As such, the control effect of the application can be effectively improved, the power consumption for running the application can be effectively reduced, and the performance of running the application subsequently is optimized.

FIG. 4 is a structural schematic diagram illustrating an application control apparatus provided by the embodiments of the disclosure.

Referring to FIG. 4, the apparatus 400 is applied to an electronic device. The apparatus 400 includes a determining module 401 and a starting module 402.

The determining module 401 is configured to determine a type of a to-be-launched application.

The starting module 402 is configured to start, according to the type of the to-be-launched application, a running system corresponding to the to-be-launched application. The running system includes an application operating system and a real-time operating system, the application operating system and the real-time operating system run independently of each other on the electronic device, where resources required for running the application operating system are greater than resources required for running the real-time operating system.

It should be noted that, the above description of the embodiments of the application control methods according to FIG. 1 and FIG. 2 is also adapted to the application control apparatus 400 in the embodiments, as they have similar implementation principles. Details are not repeated here.

In the embodiments, the type of the to-be-launched application is determined, and the running system corresponding to the to-be-launched application is started according to the type of the to-be-launched application, where the running system includes the application operating system and the real-time operating system, the application operating system and the real-time operating system run independently of each other on the electronic device, where the resources required for running the application operating system are greater than the resources required for running the real-time operating system. As such, the control effect of the applications can be effectively improved, the power consumption for running the applications can be effectively reduced, and the subsequent running performance of the applications is optimized.

FIG. 5 is a structural schematic diagram illustrating another application control apparatus provided by the embodiments of the disclosure.

Referring to FIG. 5, the apparatus 500 is applied to an electronic device. The apparatus 500 includes a displaying module 501, a receiving module 502 and a controlling module 503.

The displaying module 501 is configured to display an application of a first application type and an application of a second application type, where resources required for running the application of the first application type are greater than resources required for running the application of the second application type.

The receiving module 502 is configured to receive an application-launching instruction.

The controlling module 503 is configured to control, when the application-launching instruction is directed at the application of the first application type, the application of the first application type to run in an application operating system; and control, when the application-launching instruction is directed at the application of the second application type, the application of the second application type to run in a real-time operating system.

It should be noted that, the above description of the embodiments of the application control methods according to FIG. 3 is also adapted to the application control apparatus 500 in the embodiments, as they have similar implementation principles. Details are not repeated here.

In the embodiments, the application of the first application type and the application of the second application type are displayed, where the resources required for running the application of the first application type are greater than the resources required for running the application of the second application type. And an application-launching instruction is received. In response to detecting that the application-launching instruction is directed at the application of the first application type, the application of the first application type is controlled to run in the application operating system. In response to detecting that the application-launching instruction is directed at the application of the second application type, the application of the second application type is controlled to run in the real-time operating system. As such, the control effect of the application can be effectively improved, the power consumption for running the application can be effectively reduced, and the performance of running the application subsequently is optimized.

FIG. 6 is a structural schematic diagram illustrating an electronic device provided by the embodiments of the disclosure.

Referring to FIG. 6, the electronic device 60 provided by the embodiments includes a processor, a memory, a circuit board 605, and a power circuit 606. The memory stores an application operating system and a real-time operating system, in which the application operating system and the real-time operating system are capable of running independently of each other. The processor is configured to determine a type of a to-be-launched application; and start, according to the type of the to-be-launched application, a running system corresponding to the to-be-launched application. The running system includes the application operating system and the real-time operating system which run independently of each other on the electronic device, and resources required for running the application operating system are greater than resources required for running the real-time operating system.

The processor includes an application processor 601 and a coprocessor 602. The application processor 601 is configured to control the to-be-launched application of a first application type to run in the application operating system, and the coprocessor 602 is configured to control the to-be-launched application of a second application type to run in the real-time operating system. A power consumption of the coprocessor 602 is less than a power consumption of the application processor 601.

The memory includes a first memory 603 and a second memory 604, and the application operating system and the real-time operating system are stored in the first memory 603 and the second memory 604, respectively.

It should be noted that, the above description of the embodiments of the application control methods according to FIG. 1, FIG. 2 and FIG. 3 is also adapted to the electronic device 60 in the embodiments, as they have similar implementation principles. Details are not repeated here.

In the embodiments, the type of the to-be-launched application is determined, and the running system corresponding to the application is started according to the type of the to-be-launched application, where the running system includes the application operating system and the real-time operating system, the application operating system and the real-time operating system run independently of each other on the electronic device, where the resources required for running the application operating system are greater than the resources required for running the real-time operating system. As such, the control effect of the application can be effectively improved, the power consumption for running the program can be effectively reduced, and the performance of executing the application subsequently is optimized.

In order to implement the above embodiments, the embodiments of the disclosure provide a computer-readable storage medium. The computer-readable storage medium stores a computer program, which, when being executed by a processor, causes the application control method in the above method embodiments to be implemented.

In the descriptions of the disclosure, it should be noted that terms "first", "second" and the like, are only used for the purpose of description and cannot be understood as indicating or implying relative importance. In addition, in the description of the disclosure, unless otherwise stated, "multiple" means two or more than two.

Any process or method in the flowcharts or described herein in another manner may be understood as indicating a module, a segment, or a part which include code of one or more executable instructions for implementing a particular logical function or a process operation. In addition, the scope of preferred embodiments of the disclosure includes other implementations in which functions may be executed out of the order shown or discussed, substantially concurrently or in reverse order depending on the functions involved, as would be understood by those skilled in the art to which embodiments of the present application pertain.

It should be understood that each part of the disclosure may be implemented in hardware, software, firmware, or a combination thereof. In the above implementations, multiple operations or methods may be implemented with software or firmware stored in a memory and executed by a suitable instruction execution system. For example, if implemented in hardware, as in another implementation, it can be implemented by any one or combination of the following technologies, which are well known in the art: a discrete logic circuit having a logic gate circuit for implementing a logic function on a data signal, an application specific integrated circuit having an appropriate combinational logic gate circuit, a programmable gate array (PGPGA), a field programmable gate array (FPGA), or the like.

Those ordinary skilled in the art should understand that all or part of the operations in the methods provided in the above embodiments may be implemented by a program instructing the related hardware. The program may be stored in a computer readable storage medium, and the program, when executed, includes one or a combination of the operations in the method embodiments.

In addition, functional units in various embodiments of the disclosure may be integrated into one processing module, or each unit may exist alone physically, or two or more units are integrated into one module. The integrated module can be realized in the form of hardware or in the form of a software functional module. When the integrated module is realized in a form of software function module and is sold or used as a standalone product, the integrated module may be stored in a computer readable storage medium.

The storage medium mentioned above may be read-only memories, magnetic disks, CD, etc.

In the description of the specification, the terms "one embodiment", "some embodiments", "an example", "a specific example", or "some examples" or the like mean that specific features, structures, materials or characteristics described in combination with the embodiment or example are included in at least one embodiment or example of the disclosure. In the specification, demonstrative expressions of the terms may not refer to the same embodiment or example. Moreover, the specific features, structures, materials or characteristics as described may be combined in a suitable manner in any one or more embodiments or examples.

Although the embodiments of the disclosure have been shown and described in the above, it should be understood that the above embodiments are exemplary and should not be construed as limiting the disclosure. Changes, alternatives, and modifications can be made to the above embodiments within the scope of the disclosure by those skilled in the art.

## Claims

1. An application control method, applied to an electronic device, the method comprising:
determining a type of a to-be-launched application; and
starting, according to the type of the to-be-launched application, a running system corresponding to the to-be-launched application, wherein the running system comprises an application operating system and a real-time operating system, the application operating system and the real-time operating system run independently of each other on the electronic device, and resources required for running the application operating system are greater than resources required for running the real-time operating system.

2. The application control method as claimed in claim 1, wherein the type of the to-be-launched application comprises a first application type and a second application type, and resources required for running the to-be-launched application of the first application type are greater than resources required for running the to-be-launched application of the second application type;
in response to determining that the type of the to-be-launched application is the first application type, starting the application operating system to run the to-be-launched application of the first application type in the application operating system; and
in response to determining that the type of the to-be-launched application is the second application type, starting the real-time operating system to run the to-be-launched application of the second application type in the real-time operating system.

3. The application control method as claimed in claim 2, wherein the starting the application operating system to run the to-be-launched application of the first application type in the application operating system in response to determining that the type of the to-be-launched application is the first application type, comprises:
in response to determining that the type of the to-be-launched application is the first application type and a current running system is the real-time operating system, closing the real-time operating system, and starting the application operating system to run the to-be-launched application of the first application type in the application operating system.

4. The application control method as claimed in claim 2, wherein the starting the real-time operating system to run the to-be-launched application of the second application type in the real-time operating system in response to determining that the type of the to-be-launched application is the second application type, comprises:
in response to determining that the type of the to-be-launched application is the second application type and a current running system is the application operating system, closing the application operating system, and starting the real-time operating system to run the to-be-launched application of the second application type in the real-time operating system.

5. The application control method as claimed in any one of claims 2-4, further comprising:
controlling, by an application processor, the to-be-launched application of the first application type to run in the application operating system; and
controlling, by a coprocessor, the to-be-launched application of the second application type to run in the real-time operating system, wherein a power consumption of the coprocessor is less than a power consumption of the application processor.

6. An application control method, applied to an electronic device, the method comprising:
displaying an application of a first application type and an application of a second application type, wherein resources required for running the application of the first application type are greater than resources required for running the application of the second application type;
receiving an application-launching instruction;
in response to detecting that the application-launching instruction is directed at the application of the first application type, controlling the application of the first application type to run in an application operating system; and
in response to detecting that the application-launching instruction is directed at the application of the second application type, controlling the application of the second application type to run in a real-time operating system.

7. The application control method as claimed in claim 6, when it is detected that the application-launching instruction is directed at the application of the first application type, the method further comprises:
detecting a current running system, and determining whether the current running system is the real-time operating system; and
in response to determining that the current running system is the real-time operating system, closing the real-time operating system, and starting the application operating system to run the application of the first application type in the application operating system.

8. The application control method as claimed in claim 6, when it is detected that the application-launching instruction is directed at the application of the second application type, the method further comprises:
detecting a current running system, and determining whether the current running system is the application operating system; and
in response to determining that the current running system is the application operating system, closing the application operating system, and staring the real-time operating system to run the application of the second application type in the real-time operating system.

9. The application control method as claimed in any one of claims 6-8, further comprising:
controlling, by an application processor, the application of the first application type to run in the application operating system; and
controlling, by a coprocessor, the application of the second application type to run in the real-time operating system, wherein a power consumption of the coprocessor is less than a power consumption of the application processor.

10. An application control apparatus, applied to an electronic device, the apparatus comprising:
a determining module, configured to determine a type of a to-be-launched application; and
a starting module, configured to start, according to the type of the to-be-launched application, a running system corresponding to the application, wherein the running system comprises an application operating system and a real-time operating system, the application operating system and the real-time operating system run independently of each other on the electronic device, and resources required for running the application operating system are greater than resources required for running the real-time operating system.

11. An application control apparatus, applied to an electronic device, the apparatus comprising:
a displaying module, configured to display an application of a first application type and an application of a second application type, wherein resources required for running the application of the first application type are greater than resources required for running the application of the second application type;
a receiving module, configured to receive an application-launching instruction;
a controlling module, configured to control, when the application-launching instruction is directed at the application of the first application type, the application of the first application type to run in an application operating system; and control, when the application-launching instruction is directed at the application of the second application type, the application of the second application type to run in a real-time operating system.

12. An electronic device, comprising:
a processor; and
a memory, storing an application operating system and a real-time operating system, the application operating system and the real-time operating system being capable of running independently of each other; and
wherein the processor is configured to: determine a type of a to-be-launched application; and start, according to the type of the to-be-launched application, a running system corresponding to the to-be-launched application, the running system comprising the application operating system and the real-time operating system which run independently of each other on the electronic device, and resources required for running the application operating system being greater than resources required for running the real-time operating system.

13. The electronic device as claimed in claim 12, wherein the processor comprises an application processor and a coprocessor, the application processor is configured to control the to-be-launched application of a first application type to run in the application operating system, and the coprocessor is configured to control the to-be-launched application of a second application type to run in the real-time operating system, a power consumption of the coprocessor being less than a power consumption of the application processor.

14. The electronic device as claimed in claim 12, wherein the memory comprises a first memory and a second memory, and the application operating system and the real-time operating system are stored in the first memory and the second memory, respectively.

15. The electronic device as claimed in claim 12, wherein the type of the to-be-launched application comprises a first application type and a second application type, and resources required for running the to-be-launched application of the first application type are greater than resources required for running the to-be-launched application of the second application type; and the processor is further configured to:
start, when it is determined that the type of the to-be-launched application is the first application type, the application operating system to run the to-be-launched application of the first application type in the application operating system; and
start, when it is determined that the type of the to-be-launched application is the second application type, the real-time operating system to run the to-be-launched application of the second application type in the real-time operating system.

16. The electronic device as claimed in claim 12, wherein the processor is further configured to:
when it is determined that the type of the to-be-launched application is the first application type and a current running system is the real-time operating system, close the real-time operating system, and start the application operating system to run the to-be-launched application of the first application type in the application operating system.

17. The electronic device as claimed in claim 12, wherein the processor is further configured to:
when it is determined that the type of the to-be-launched application is the second application type and a current running system is the application operating system, close the application operating system, and start the real-time operating system to run the to-be-launched application of the second application type in the real-time operating system.

18. An electronic device, wherein an application of a first application type and an application of a second application type are displayed on the electronic device, resources required for running the application of the first application type are greater than resources required for running the application of the second application type, and the electronic device comprises:
a processor; and
a memory, storing an application operating system and a real-time operating system, the application operating system and the real-time operating system being capable of running independently of each other; and
wherein the processor is configured to: receive an application-launching instruction; and control, when the application-launching instruction is directed at the application of the first application type, the application of the first application type to run in the application operating system, and control, when the application-launching instruction is directed at the application of the second application type, the application of the second application type to run in the real-time operating system.

19. The electronic device as claimed in claim 18, wherein the processor comprises an application processor and a coprocessor;
the application processor is configured to control the application of the first application type to run in the application operating system; and
the coprocessor is configured to control the application of the second application type to run in the real-time operating system, wherein a power consumption of the coprocessor is less than a power consumption of the application processor.

20. A computer readable storage medium, storing thereon a computer program, wherein the program, when being executed by a processor, causes the application control method as claimed in any one of claims 1-5 to be implemented, or causes the application control method as claimed in any one of claims 6-9 to be implemented.
